**Europäisches Patentamt**

**European Patent Office**

**Office européen des brevets**

(19)

(11) Veröffentlichungsnummer: **0 123 787 B1**

(12) ## EUROPÄISCHE PATENTSCHRIFT

(45) Veröffentlichungstag der Patentschrift:
**10.12.86**

(51) Int. Cl.⁴: **B 23 B 41/02,** B 23 B 29/02

(21) Anmeldenummer: **84100792.5**

(22) Anmeldetag: **26.01.84**

(54) **Tiefbohrwerkzeug.**

(30) Priorität: **03.03.83 DE 3307458**

(43) Veröffentlichungstag der Anmeldung:
**07.11.84 Patentblatt 84/45**

(45) Bekanntmachung des Hinweises auf die Patenterteilung:
**10.12.86 Patentblatt 86/50**

(84) Benannte Vertragsstaaten:
**AT BE CH FR GB IT LI LU NL SE**

(56) Entgegenhaltungen:
**AT - B - 251 373**
**CH - A - 355 338**
**DD - A - 154 072**
**GB - A - 1 107 472**
**US - A - 3 213 525**
**US - A - 4 053 249**

(73) Patentinhaber: **TBT Tiefbohrtechnik GmbH und Co. KG.,**
**Siemensstrasse 1, D-7433 Dettingen (DE)**

(72) Erfinder: **Weiblen, Richard, Birkenweg 42,**
**D-7420 Münsingen-Dottingen (DE)**

(74) Vertreter: **Dreiss, Uwe, Dr. jur. Dipl.-Ing. M.Sc. et al,**
**Patentanwälte Dreiss, Hosenthien & Fuhlendorf**
**Gerokstrasse 6, D-7000 Stuttgart 1 (DE)**

**Beschreibung**

Die Erfindung betrifft ein Tiefbohrwerkzeug, bei dem ein Schaft mit einer sich in Vorschubrichtung an sein vorderes Ende anschliessenden Führungsstange verbunden ist, und bei dem ferner im Bereich der Verbindung von Schaft und Führungsstange als Bohrkopf ein mehrere Bohrschneiden aufweisender Mehrschneidkörper angeordnet ist, bei dem ferner der Führungsflächen aufweisende Mehrschneidenkörper einerseits und die Führungsstange andererseits in verschiedenen in entsprechendem Abstand voneinander angeordneten Bohrbuchsen führbar sind, zwischen denen das Werkstück anordenbar ist.

Ein derartiges Tiefbohrwerkzeug ist aus der DD-PS 154 072 bekannt geworden. Es handelt sich dabei um ein in dem sog. BTA-Verfahren einsetzbares Tiefbohrwerkzeug, bei dem als Schaft ein Doppelrohr verwendet wird, wobei durch den äusseren Rohrmantel unter Druck stehendes Kühl- und Schmiermedium an die Bohrstelle gelangt, das durch Öffnungen an der Stirnseite des Bohrkopfes dann zu dem durch das Innenrohr gebildeten Kanal zurückgeführt wird, wobei die an der Bohrstelle entstehenden Späne abgeführt werden.

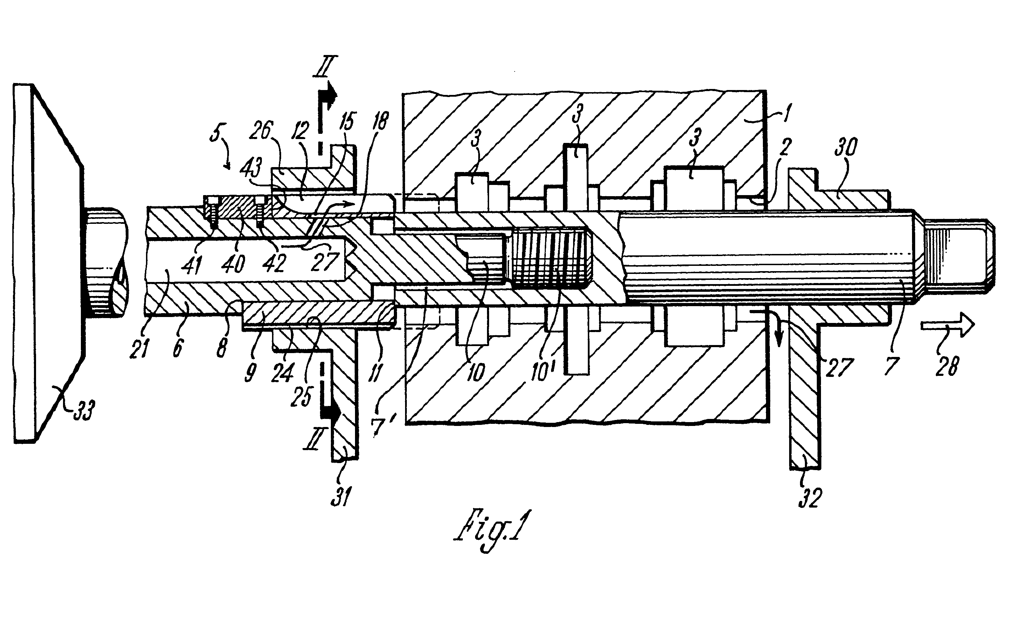

Nachteilig an dieser Anordnung ist, dass am vorderen Ende des Ringspaltes zwischen der Führungsstange (3) und der vorgebohrten Bohrung (2), also am linken vorderen Ende der Anordnung nach Fig. 1 der genannten Veröffentlichung, ein Spänestau auftreten kann. Sieht man an dieser Stelle jedoch zwischen Werkstück und dem dort notwendigerweise dichtend anschliessenden Gegenlager (6) eine Abführmöglichkeit für das Kühlmedium und die Späne vor, so ist die Anordnung infolge der Besonderheiten des ausgeschilderten BTA-Verfahrens nicht mehr funktionsfähig, weil die Rückfuhr des Mediums durch das Innenrohr nicht mehr gewährleistet ist.

Bei der bekannten Einrichtung ist der Bohrkopf mittels Bayonettverschluss das äussere Rohr (12) des doppelwandigen Schaftes eingeschraubt, während der die Verbindung zur Führungsstange (3) herstellende Koppelzapfen (17) in dem Bohrkopf (4) eingeschraubt ist. Nachteilig daran ist, dass der Bohrkopf beidseitig durch entsprechende Gewinde bzw. den Bayonettverschluss die mechanischen Kräfte der Verbindung der gesamten Einheit aufnehmen muss; dies muss auch notwendigerweise besonders stark erfolgen, da ansonsten der durch die beiden Lager getriebene hohe Aufwand zur Vermeidung von Durchbiegungen des Werkzeuges nicht zum Tragen kommen könnte.

Aufgabe der Erfindung ist es, ein Tiefbohrwerkzeug der eingangs genannten Art als Einlippen-Bohrwerk auszubilden und dabei eine möglichst einfache und sichere Anbringung des Mehrschneidenkörpers vorzusehen.

Diese Aufgabe wird durch den kennzeichnenden Teil des Anspruchs 1 gelöst.

Erfindungsgemäss ergibt sich also eine leichte Auswechselbarkeit des Mehrschneidenkörpers bei gleichzeitig guter Halterung, wobei die gesamte durch Schaft, Führungsstange und Mehrschneidenkörper gebildete Einheit extrem rigide ist, ohne mit der Qualität der Verbindung den Mehrschneidenkörper selbst zu belasten. Mit einem Einlippen-Bohrwerkzeug dieser Art können extrem «runde» Geschlossenbohrungen gebohrt werden, bei denen auch gewährleistet ist, dass Abweichungen des Verlaufs der Bohrachse von einer Geraden so weit wie möglich behoben sind. Ein derartiges Tiefbohrwerkzeug ist insbesondere zum Aufbohren bereits vorgebohrter Bohrungen geeignet. Derartige Werkzeuge sind insbesondere in solchen Fällen besonders vorteilhaft einsetzbar, in denen die vorgebohrte Bohrung bereits Nuten oder dgl. aufweist, so dass die Führung des Bohrwerkzeuges durch sich selbst, wie dies etwa bei herkömmlichen Tiefbohrwerkzeugen der Fall ist, nicht ausreicht. Die durch Schaft und Führungsstange gebildete Einheit trägt dabei den auswechselbaren Mehrschneidenkörper.

Weitere vorteilhafte Weiterbildungen der Erfindung ergeben sich aus der folgenden Beschreibung. Sie erfolgt anhand der beigefügten Zeichnungen, die ein Ausführungsbeispiel darstellen. Es zeigen:

Fig. 1 einen Querschnitt durch ein Ausführungsbeispiel;

Fig. 2 einen Schnitt entlang der Linie II-II, jedoch ohne Bohrbuchse 26, gemäss Fig. 1;

Fig. 3 eine Draufsicht auf den in Fig. 2 dargestellten Mehrschneidenkörper in Richtung des Pfeiles III, wodurch die hier nicht interessierenden Teile nicht dargestellt sind.

In einem Werkstück 1 ist eine Bohrung 2 vorgesehen, deren Besonderheit eine Reihe von mit Absätzen versehenen Nuten 3 liegt. Die Bohrung 2 soll mit dem Aufbohrwerkzeug, wie es im folgenden beschrieben und Bestandteil der erfindungsgemässen Vorrichtung ist, aufgebohrt werden. Das heisst durch einen weiteren Bohrvorgang soll der Durchmesser — u.U. nur um wenige Zehntel mm — erweitert werden. Bei diesem Aufbohrvorgang wird die Forderung gestellt, dass die entstehende Bohrung extreme Rundheit aufweisen soll, d.h. dass die Abweichungen der tatsächlich gebohrten Bohrung im Querschnitt von der idealen Kreisform so gering wie möglich sein sollen; ferner wird die Forderung gestellt, dass die Abweichung der Achse der tatsächlichen Bohrung von dem idealen Verlauf der Achse praktisch Null sein soll. Jegliche Art von «Achsschiefe» oder, wie man dies auch bezeichnet, von «Verlaufen» der Bohrung soll praktisch ausgeschlossen sein.

Das Aufbohrwerkzeug ist allgemein mit 5 bezeichnet. Es wird gebildet durch einen Schaft 6 und eine Führungsstange 7. Der Schaft 6 weist einen Absatz 8 auf. An dieser Stelle reduziert sich der Durchmesser. Dieser Absatz 8 dient als Anschlag eines auf den Schaft 6 im Bereich seines reduzierten Durchmesser aufgesetzten Mehrschneidenkörpers 9. Am — in Fig. 1 — rechten Ende ist der Schaft 6 mit einem Dorn 10 versehen, dessen Ende mit einem Gewinde 10' versehen ist. Auf dieses Gewinde 10' ist die Führungsstange 7 aufgeschraubt. Sie ist zu diesem Zweck an ihrem linken Ende mit einem Sackloch 7' versehen, dessen — in Fig. 1 — rechter Bereich ebenfalls mit einem Gewinde ausgestattet ist. Die Führungsstange 7 wird derart auf den Dorn 10 des Schaftes 6 aufgeschraubt. Dabei drückt sie, wie bei 11 zu ersehen, derart auf den Mehrschneidenkörper 9, dass dieser gegen den Absatz 8 gedrückt und somit fest auf dem Aufbohrwerkzeug 5 gehalten wird.

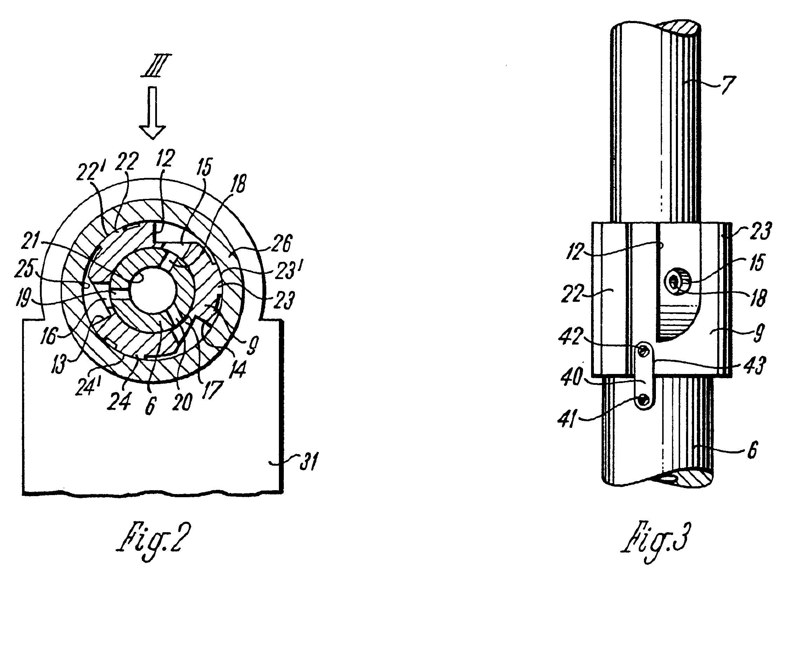

Der weitere Aufbau des Mehrschneidenkörpers 9 ist aus Fig. 2 und 3 ersichtlich. Der Mehrschneidenkörper ist mit drei Schneiden 12, 13, 14 versehen, die die eigentlichen Bohrschneiden darstellen und in der gezeigten Weise entlang des Umfangs des Mehrschneidenkörpers 9 in diesen eingefräst sind. In die abgeflachten Bereiche, die senkrecht zu den Bohrschneiden 12 - 14 sich infolge des Einfräsens der Bohrschneiden ausbilden, sind Löcher 15 - 17 eingebracht. Ferner weist der Schaft 6 Löcher 18 - 20 auf. Der Schaft 6 selbst ist mit einem Innenkanal 21 versehen. Auf dem Weg über den Innenkanal 21, sowie die Löcher 15 - 17 und die Löcher 18 - 20 wird Kühlmittel an die Bohrstelle transportiert. Dies geschieht im Prinzip auf dieselbe Art und Weise wie bei dem bekannten Einlippen-Bohrverfahren. Entlang des Umfangs des Mehrschneidenkörpers 9 sind noch Führungsleisten 22 - 24 vorgesehen, mit denen sich der Mehrschneidenkörper 9 des Aufbohrwerkzeuges 5 beim Anbohren — dieser Phase der Bearbeitung entspricht die Darstellung in Fig. 1 — an der inneren Führungsfläche 25 der Bohrbuchse 26 abstützt. Im Verlauf des weiteren Borvorganges dienen dann diese Führungsleisten dazu, dass sich der Mehrschneidenkörper 9 so weit wie möglich an der Innenfläche des bereits aufgebohren Bereiches der Bohrung 2 abstützt; vgl. die gestrichelte Position 9' in Fig.1. Die Kühlmittelabfuhr von der Bohrstelle weg (zusammen mit den Spänen) erfolgt im Verlauf des Aufbohrens der Bohrung 2 nach vorne, d.h. in Fig. 1 nach rechts, wie durch die Pfeile 27 angedeutet.

Die Führungsstange 7 ist an ihrem rechten Ende, also in Vorschubrichtung (Pfeil 28) ebenfalls in einer weiteren Bohrbuchse 30 gelagert. Das ist ein wesentliches Element für die Anwendung des vorliegenden Bohrwerkzeuges. Es beruht darauf, dass das eigentliche Bohrwerkzeug, nämlich der Mehrschneidenkörper 9, nicht an den in Vorschubrichtung vorderen Ende eines Schaftes oder Bohrrohres, sondern vielmehr um die Länge der Führungsstange 7 zurückversetzt angeordnet ist, so dass das gesamte Bohrwerkzeug an zwei Stellen, nämlich in der Bohrbuchse 26 und in der Bohrbuchse 30 gelagert werden kann. Dies gewährleistet die extrem gute Rundheit und Geradheit der stehenden Bohrungen bei dem Aufbohrvorgang mit dem erfindungsgemässen Werkzeug.

Die Bohrbuchsen 26 bzw. 30 sind über Bohrbuchsenhalter 31 bzw. 32 auf einem (nicht gezeigten) Maschinenbett befestigt. Ebenso auf dem Maschinenbett angeordnet ist die Bohrspindel 33, in die das Aufbohrwerkzeug 5 eingespannt ist.

Wie aus Fig. 3, aber auch aus Fig. 1 ersichtlich, wird der Mehrschneidenkörper 9 auf dem Schaft 6 in Drehrichtung dadurch mitgenommen, dass ein Mitnehmer 40 mit dem Schaft 6 mittels zweier Schrauben 41 und 42 verschraubt ist. Die Anordnung ist derart, dass der Mitnehmer 40 etwa zur Hälfte in einer Nut 43, die im Mehrschneidenkörper 9 vorgesehen ist, angeordnet ist. Es sind natürlich auch andere Möglichkeiten denkbar, um den Mehrschneidenkörper 9 gegenüber einer Verdrehung zu sichern. Auf die konstruktive Ausbildung dieser Verdrehsicherung im einzelnen kommt es nicht an. Es sind auch gegenüber dem gezeigten Ausführungsbeispiel andere Möglichkeiten gegeben, um den Mehrschneidenkörper 9 gegen den Absatz 8 zu drücken. So kann man z.B. in dem Dorn 10 entsprechende Ringe oder Schrauben oder dgl. vorsehen, um den Mehrschneidenkörper 9 auf dem Schaft 6 festzuspannen.

**Patentansprüche**

1. Tiefbohrwerkzeug, bei dem ein Schaft (6) mit einer sich in Vorschubrichtung (28) an sein vorderes Ende angeschliessenden Führungsstange (7) verbunden ist, und bei dem ferner im Bereich der Verbindung von Schaft und Führungsstange als Bohrkopf ein mehrere Bohrschneiden (12, 13, 14) aufweisender Mehrschneidenkörper (9) angeordnet ist, bei dem ferner der Führungsflächen (22', 23', 24') aufweisende Mehrschneidenkörper einerseits und die Führungsstange (7) andererseits in verschiedenen in entsprechendem Abstand voneinander angeordneten Bohrbuchsen (26, 30) führbar sind, zwischen denen das Werkstück (1) anordenbar ist, dadurch gekennzeichnet, dass die Führungsstange (7) auf einen Dorn (10) aufgeschraubt ist, der mit dem Schaft (6) verbunden ist und der auswechselbare Mehrschneidenkörper (9) zwischen einem Absatz (8) am Ende des Schaftes (6) und dem Stirnende der Führungsstange (7) eingespannt ist, wobei das Tiefbohrwerkzeug als Einlippenbohrer mit nur einem Innenkanal (21) ausgebildet ist.

2. Tiefbohrwerkzeug nach Anspruch 1, dadurch gekennzeichnet, dass der Mehrschneidenkörper (9) durch eine Verdrehsicherung (40) auf der durch Schaft (6) und Führungsstange (7) gebildeten Einheit gehalten wird.

**Claims**

1. Deep drilling tool having a shaft (6) connected with its forward end in feed direction to a guiding rod (7) and having further, in the area of connection of the shaft with the guiding rod, a drilling head body (9) with a plurality of drilling cutting edges (12, 13, 14) and guidance surfaces (22', 23', 24') and wherein the guiding rod (7) said body can be guided in separate and spaced drilling sleeves (26, 30), between which the work piece (1) can be arranged, characterized in that the guidance rod (7) is screwed onto a mandrel (10) connected to the shaft (6), and in that the exchangeable multiple cutting edges body (9) is tight-gripped between a step (8) at the end of the shaft and the front face of the guiding rod, and further in that the deep drilling tool is a one-lip-boring tool with only one interior channel (21).

2. Deep drilling tool in accordance to claim 1 characterized in that the multiple cutting edges body (9) is held on the unit formed by the shaft (6) and the guiding rod (7) by securing means (40).

**Revendications**

1. Outil pour aléser des trous profonds, dans lequel un arbre (6) est relié à une tige conductrice (7) raccordée à son extrémité avant dans le sens d'avancement (28), et dans lequel en outre au voisinage de la liaison entre l'arbre et la tige conductrice, un corps à lames multiples (9) présentant plusieurs lames d'alésage (12, 13, 14) est disposé comme tête d'alésoir, dans lequel en outre le corps à lames multiples présentant les faces de guidage (22', 23',24') d'une part et la tige conductrice (7) d'autre part sont disposés dans des douilles porte-foret (26, 30) situées à une distance appropriée l'une de l'autre, et entre lesquelles on peut placer la pièce à usiner (1), outil caractérisé en ce que la tige contructrice (7) est vissée sur un mandrin (10) qui est relié à l'arbre (6) et le corps à lames multiples (9) remplaçable est serré entre un épaulement (8) à l'extrémité de l'arbre (6) et l'extrémité frontale de la tige conductrice (7), l'outil d'alésage de trous profonds étant conçu sous la forme d'un alésoir à un seul tranchant avec seulement un canal intérieur (21).

2. Outil pour aléser des trous profonds selon la revendication 1 caractérisé en ce que le corps à lames multiples (9) est fixé par une fixation contre la rotation (40) sur l'ensemble formé par l'arbre (6) et la tige conductrice (7).

Fig.1

*Fig.2*

*Fig.3*

0 123 787